# EUROPÄISCHE PATENTSCHRIFT

(11) **EP 1 862 360 B1**
(45) Veröffentlichungstag und Bekanntmachung des Hinweises auf die Patenterteilung: **03.12.2008**
(21) Anmeldenummer: 07100367.7
(22) Anmeldetag: 11.01.2007
(51) Int. Cl.: B60R 21/13

(54) **Überrollschutzsystem für Kraftfahrzeuge mit einem aktiv aufstellbaren Überrollbügel**
Rollover protection system for motor vehicles with an active roll-bar
Système de protection contre les tonneaux pour véhicules automobiles dotés d'un arceau de sécurité pouvant être monté activement

(30) Priorität: 12.01.2006 DE 102006001579
(43) Veröffentlichungstag der Anmeldung: 05.12.2007
(73) Patentinhaber: ISE Automotive GmbH, 51702 Bergneustadt (DE)
(72) Erfinder: Latussek, Holger, 51702, Bergneustadt (DE)
(74) Vertreter: Fuchs

(56) Entgegenhaltungen:
- EP-A1- 0 657 327
- EP-A1- 0 976 621
- DE-A1- 4 342 400
- DE-C1- 10 040 649
- DE-C1- 10 044 929

## Beschreibung

Die Erfindung bezieht sich auf ein Überrollschutzsystem für Kraftfahrzeuge mit einem Überrollbügel, der mittels seiner beiden Bügelschenkel in einer fahrzeugfesten Halterung geführt aufgenommen ist, und im Normalzustand durch eine Haltevorrichtung in einer unteren, abgelegten Ruhelage haltbar sowie sensorgesteuert unter Lösen der Haltevorrichtung durch einen Energiespeicher in eine verriegelte aufgestellte, stützende Stellung bringbar ist, wobei die fahrzeugfeste Halterung zwei Führungsteile mit jeweils einer Führungsöffnung zur Aufnahme des zugehörigen Bügelschenkels besitzt und der Führungsöffnung Führungskomponenten für die Bügelschenkel zugeordnet sind.

Derartige Überrollschutzsysteme dienen zum Schutz der Insassen in Kraftfahrzeugen ohne schützendes Dach, typischerweise in Cabriolets oder Sportwagen, indem sie bei einem Überschlag einen Überlebensraum für die Insassen aufspannen.

Es ist dabei bekannt, einen die gesamte Fahrzeugbreite überspannenden, fest installierten Überrollbügel vorzusehen (EP 0 233 777) oder jedem Fahrzeugsitz einen höhenunveränderlich fest installierten Überrollbügel (DE 196 04 423) zuzuordnen. Neben diesen so genannten starren Überrollbügeln sind auch weit verbreitet konstruktive Lösungen für so genannte aktive Überrollbügelsysteme im Markt, bei denen der Überrollbügel im Normalzustand abgelegt ist, und im Gefahrenfall, also bei einem drohenden Überschlag, sensorgesteuert mittels eines Energiespeichers schnell in eine schützende verriegelte Position aufgestellt wird, um zu verhindern, dass die Fahrzeuginsassen durch das sich überschlagende Fahrzeug erdrückt werden.

Diese so genannten "aktiven" Überrollschutzsysteme weisen typischerweise für jeden Sitz einen in einem fahrzeugfesten Kassetten-Gehäuse mit seinen Bügelschenkeln meist linear geführten U-förmigen Überrollbügel auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, stützende Stellung bringbar ist, wobei eine dann in Wirkeingriff tretende Verriegelungseinrichtung ein Eindrücken des Überrollbügels in die Kassette verhindert.

Eine derartige Kassetten-Konstruktion eines Überrollbügelschutzsystems mit linear aufstellendem Überrollbügel und mit einer Sperrklinke in der Verriegelungseinrichtung zeigt beispielsweise die DE 100 40 642 C1.

Neben den Kassetten-Konstruktionen sind auch aktive Überrollschutzsysteme nach einem Konstruktionsprinzip mit einer Rückwand-Baueinheit bekannt, wie es beispielsweise in der DE 103 44 446 B3 beschrieben wird. Ein derartiges System weist eine zwischen Fond und Gepäckraum angebrachte Rahmenkonstruktion auf, bestehend einmal aus einem sich über die Innenbreite des Fahrzeuges erstreckenden, karosseriefest angebrachten Profil-Querträger, der Führungsmittel für die Bügelschenkel von zwei nebeneinander angeordneten U-förmigen Überrollbügeln aufweist sowie bestehend zum anderen aus sich vertikal nach unten erstreckenden Profil-Trägerelementen mit einem Bodenteil für die Aufnahme der üblichen Komponenten des ausfahrbaren Überrollschutzsystems, wie z.B. den Auslösemagneten für das sensorgesteuerte Auslösen der Ausfahrbewegung der Überrollbügel sowie die Antriebs-Druckfedern.

Sowohl die Kassetten-Konstruktionen als auch die Querträger-Konstruktionen sind in vielfältigen Ausführungsformen, angepasst an den jeweiligen Fahrzeugtyp, auf dem Markt eingeführt und in Betrieb.

Es sind jedoch auch Überrollschutzsysteme mit einem annähernd die gesamte Fahrzeugbreite überspannenden, aktiv aufstellbaren Überrollbügel bekannt. Dabei kann der Bügelkopf als durchgehende Bügelschale ausgebildet sein (DE 195 40 819 A1), oder kann im Bereich der Fahrzeugsitze bügelkopfartige Ausformungen aufweisen (DE 100 44 930 C1).

Bei diesen aktiven Überrollschutzsystemen mit einem ausfahrbaren Überrollbügel kommt der Führung des Überrollbügels über seine Bügelschenkel, die typischerweise rohrförmig ausgebildet sind, eine besondere Bedeutung bei. Dies gilt im besonderen Maße bei fahrzeugbreiten Überrollbügeln wegen der erhöhten Verkantungsgefahr (Schubladeneffekt).

Wie die Führung im konkreten Fall aussieht, dazu finden sich im Stand der Technik, insbesondere in der gattungsbildenden DE 43 42 400 A1, zahlreiche Hinweise.

Typischerweise ist ein oberer karosseriefester Führungsblock mit Führungsbohrungen für die äußere Führung der Bügelschenkelrohre vorgesehen, ergänzt durch eine innere Führung der Schenkelrohre im unteren Bereich.

Dabei kommt insbesondere der oberen äußeren Führung eine besondere Bedeutung bei, weil bei einem Überschlag die dabei auftretenden hohen Kräfte überwiegend in den Führungsblock abgeleitet werden.

Die Kriterien, welche die Führung der Bügelschenkel des Überrollbügels insgesamt zu erfüllen hat, sind dabei:
1) Klapperfreie Lagerung des im Grundzustand abgelegten Überrollbügels. Dieses Kriterium erfordert eine Führung und Lagerung der Bügelschenkel mit relativ kleinem Spiel, das einmal Klapperfreiheit gewährt, aber andererseits keine Beeinträchtigung für den Start der Aufstellbewegung darstellt.
2) Leichtgängiges schnelles Aufstellen des Überrollbügels im Fall eines drohenden Überschlages. Dieses Kriterium erfordert eine verkantungsfreie Führung des Überrollbügels, die den so genannten Schubladeneffekt vermeidet, jedoch mit einem ausreichenden Spiel um das leichtgängige Aufstellen zu gewährleisten.
3) Schnell wirksame Aufnahme der bei einem Überschlag auf den aufgestellten Überrollbügel wirkenden Kräfte, insbesondere der Seitenkräfte. Dieses Kriterium erfordert eine engere, d.h. spielreduzierte Führung, durch welche die Bügelschenkel bei anliegender äußerer Belastung nach relativ kleinem Weg (Spiel) in den karosseriefesten Führungsöffnungen zur Anlage kommen und damit die anliegenden Kräfte vom Bügelteil in den Führungsblock und weiter in Fahrzeugstruktur einleiten können.

Die Bedeutung dieser Kriterien wird noch größer, wenn sich der Überrollbügel über die gesamte Fahrzeugbreite erstreckt oder in an sich bekannter Weise in einer Kurvenbahn ausfährt.

Der Stand der Technik sieht typischerweise spielbestimmende Führungsbuchsen vor, die in den Führungsbohrungen des Führungsblockes aufgenommen sind, d.h. auf jeden Abschnitt des Bügels im abgelegten Zustand und beim Aufstellen in gleicher Weise wirken und somit die vorgenannten Kriterien zu unspezifisch erfüllen bzw. z. T. auch gegensätzlich wirken. Stellvertretend wird auf die bereits zitierte DE 43 42 400 A1 Bezug genommen. Zum Teil werden noch zusätzliche Führungsgegenstücke, wie etwa Zentrierringe oder eine Verprägung am Bügelschenkel verwendet.

Die Aufgabe der Erfindung besteht darin, für vorgenannte Überrollschutzsysteme mit einem aktiv aufstellbaren Überrollbügel eine äußere Führung der Bügelschenkel des Überrollbügels zu schaffen, welche die vorgenannten Kriterien im hohen Maße erfüllt.

Die Lösung dieser Aufgabe gelingt bei einem Überrollschutzsystem für Kraftfahrzeuge mit einem Überrollbügel, der mittels seiner beiden Bügelschenkel in einer fahrzeugfesten Halterung geführt aufgenommen ist, und im Normalzustand durch eine Haltevorrichtung in einer unteren, abgelegten Ruhelage haltbar sowie sensorgesteuert unter Lösen der Haltevorrichtung durch einen Energiespeicher in eine verriegelte aufgestellte, stützende Stellung bringbar ist, wobei die fahrzeugfeste Halterung zwei Führungsteile mit jeweils einer Führungsöffnung zur Aufnahme des zugehörigen Bügelschenkels besitzt und der Führungsöffnung Führungskomponenten für die Bügelschenkel zugeordnet sind, erfindungsgemäß dadurch, dass mindestens zwei Führungskomponenten axial beabstandet in einer festen Position direkt an den Bügelschenkeln ausgebildet sind, derart, dass sie in der jeweiligen Stellung des Überrollbügels in Verbindung mit angepassten Führungsbereichen der Führungsbohrung das dort jeweils notwendige Führungsspiel vorgeben.

Die Erfindung vermeidet daher mit Vorteil fest in den Führungsöffnungen installierte Führungsbuchsen, die von den Bügelschenkeln über die gesamte Ausfahrlänge durchfahren werden müssen, und daher nur unter Eingehen von Kompromissen die Spielanforderungen erfüllen können.

Die Führungskomponenten können auf verschiedene Weise ausgebildet sein. Gemäß einer ersten Ausgestaltung der Erfindung weist eine der Führungskomponenten eine ganz oder partiell peripher verlaufende Führungsfläche zur direkten Anlage an der Innenwand der zugehörigen Führungsöffnung in deren oberen Bereich in der abgelegten Ruhelage des Überrollbügels auf und ist direkt jeweils an dem zugehörigen Bügelschenkel in fester Verbindung mit ihm vorgesehen.

Gemäß einer zweiten Ausgestaltung weist eine der Führungskomponenten eine ganz oder partiell peripher verlaufende Führungsfläche zur direkten Anlage an der Innenwand der zugehörigen Führungsöffnung in deren unteren Bereich in der aufgestellten Stellung auf und ist direkt jeweils an dem zugehörigen Bügelschenkel in fester Verbindung mit ihm vorgesehen.

Gemäß einer dritten Ausgestaltung weist eine der Führungskomponenten eine peripher ganz oder partiell umlaufende Führungsfläche, die zumindest teilweise durch den Mantel des jeweiligen Schenkelrohres gebildet ist, auf.

Vorzugsweise ist dabei das Überrollschutzsystem so ausgebildet, dass die Führungsöffnung jeweils drei axial aufeinanderfolgende Führungsbereiche aufweist, die hinsichtlich des Führungspieles des von ihr aufgenommenen Bügelschenkels entsprechend den an ihm ausgebildeten Führungskomponenten unterschiedlich ausgestaltet sind.

Bei dieser Ausführungsform des erfindungsgemäßen Überrollschutzsystems sind daher entsprechend dem Patentanspruch 5 für die äußere Führung der beiden Bügelschenkel des jeweiligen Überrollbügels im Führungsblock drei Lager- bzw. Führungsbereiche in Verbindung mit an den Bügelschenkeln direkt angebrachten Führungs- und Zentrierelementen vorgesehen. Unter einer äußeren Führung im Sinne der Erfindung soll dabei eine Führung verstanden werden, die außen am Bügelschenkel wirksam wird. Unter einer Führung versteht man in der Technik gemäß einer Definition im Internet-Lexikon ein Maschinenelement, z.B. eine Linearführung, die einem anderen Bauteil bzw. Element eine bestimmte Bewegungsrichtung oder Position aufzwingt. Eine vergleichbare Definition findet sich in der Brockhaus Enzyklopädie. Eine Führung des Überrollbügels umfasst daher nicht nur die axiale Aufstellbewegung der Bügelschenkel, sondern auch deren Radialbewegungen, die typischerweise bei den Seitenbelastungen auf den Überrollbügel bei einem Überschlag auftreten.

Die einzelnen Führungsbereiche werden durch eine besondere Gestaltung der Führungsöffnung im Führungsblock, z.B. ovale Führungsöffnungen mit der langen Achse in Fahrzeugquerrichtung oder Führungsöffnungen mit (inneren) Führungsrippen, und/oder durch eine entsprechende besondere Gestaltung des Bügelschenkels, z.B. Aufweitungen, Aufschiebung von Buchsen usw., spezifisch ausgebildet, damit sie kriteriumsspezifisch je nach Stellung des Überrollbügels wirken. Dabei sind zahlreiche Varianten und Untervarianten möglich.

Entsprechende Ausgestaltungen und Weiterbildungen der Erfindung sind in Unteransprüchen gekennzeichnet und ergeben sich auch aus der folgenden Figurenbeschreibung.

Anhand von in den Patentzeichnungen in verschiedenen Ansicht und Zuständen dargestellten vorteilhaften Ausführungsbeispielen wird die Erfindung näher erläutert.

Es zeigen:
- Fig. 1: in einer schematisierten Längsschnitt-Darstellung einen Führungsteil eines karosseriefesten Führungsblockes, der eine Führungsbohrung für einen rohrförmigen Bügelschenkel eines Überrollbügelschutzsystems besitzt, welche unterschiedlich gestaltete Führungsbereiche aufweist,
- Fig. 2: in einer Vorderansicht auf den vollständigen Führungsblock eines Überrollbügelsystems nach Fig. 1 die in den Führungsbohrungen aufgenommenen rohrförmigen Bügelschenkel, die im oberen Bereich eine fest angebrachte Führungsbuchse und im unteren Bereich eine durchmessererweiterte Anformung aufweisen, wobei in der linken Figurenhälfte der Überrollbügel nahezu ausgefahren ist und der Überrollbügel in der rechten Figurenhälfte sich im abgelegten Grundzustand befindet,
- Fig. 3: in einer Darstellung entsprechend Fig. 2 ein Überrollbügelsystem, bei dem anstelle einer fest aufgebrachten Führungsbuchse an dieser Position eine durchmessererweiterte Ausformung vorgesehen ist,
- Fig. 4: in einer Darstellung entsprechend den Figuren 2 und 3 ein Überrollbügelsystem mit alternativ kranzartig am Bügelschenkel befestigten blattfederartigen Elementen,
- Fig. 5: die Ausbildung der Führungsbohrung in einem Führungsteil mit zwei gegenüberliegenden Rippen zur Spielverengung in Fahrzeuglängsrichtung, mit einer isometrischen Darstellung im Figurenteil A, einer Draufsicht auf das geschnittene Führungsteil im Figurenteil B sowie im Figurenteil C eine Alternative mit vier Rippen, und
- Fig. 6: in einer schematischen Schnitt-Darstellung die Führungsbohrung des Führungsteiles mit aufgenommenem rohrförmigen Bügelschenkel, wobei die obere Kante der Führungsbohrung zur Verhinderung einer Kerbwirkung am Bügelschenkel gerundet ist.

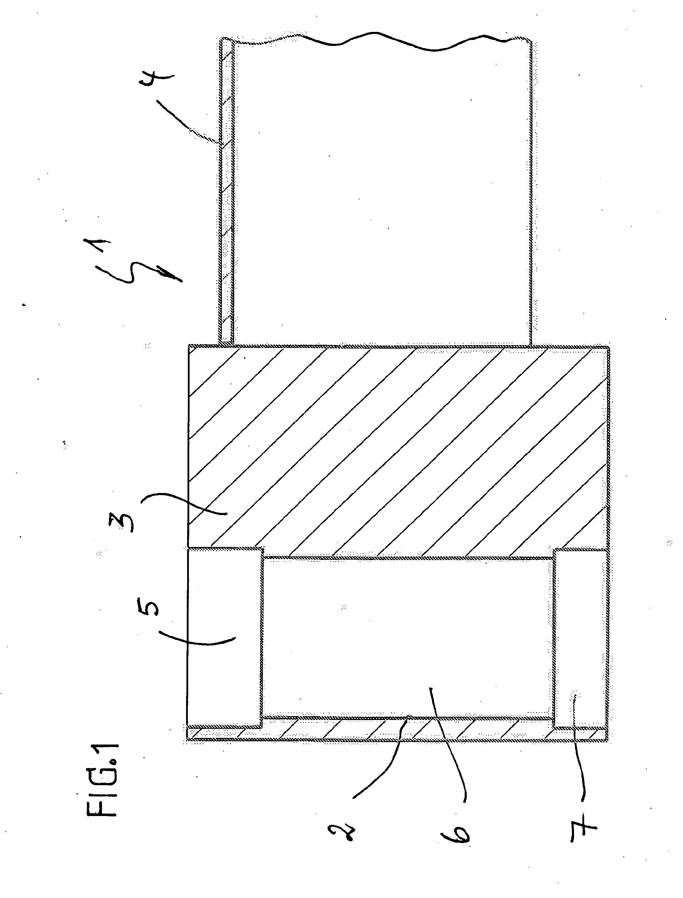

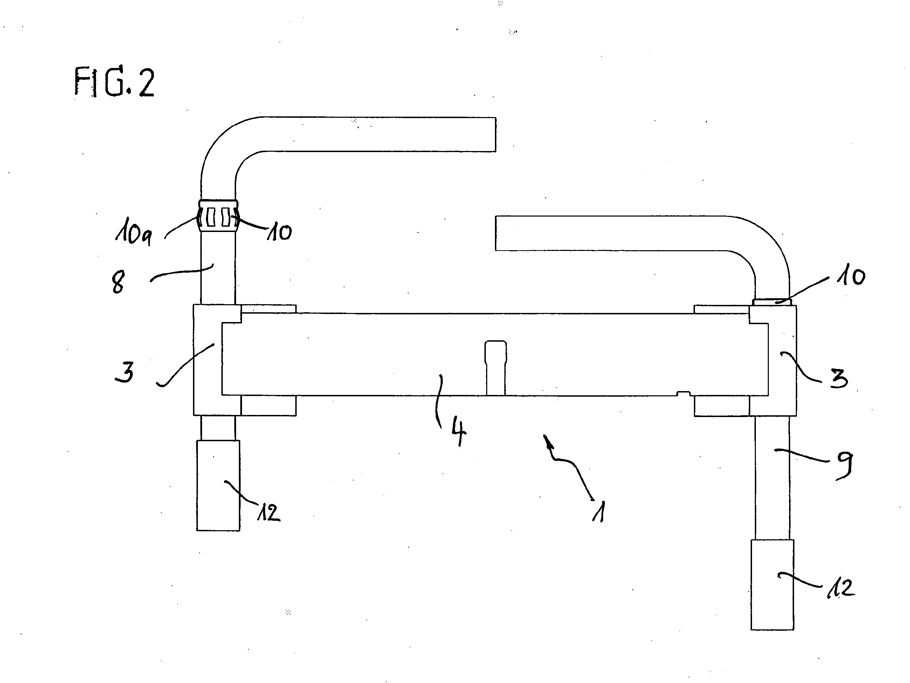

Die Fig. 1 zeigt in einer stark schematisierten Längsschnitt-Darstellung einen Ausschnitt aus einem Führungsblock 1 für ein Überrollschutzsystem mit einem ausfahrbaren Überrollbügel, der gemäß Fig. 2 zwei sich vertikal erstreckende rohrförmige Bügelschenkel 8, 9, so genannte Bügelrohre oder Schenkelrohre, aufweist, die jeweils in Führungsbohrungen 2 des karosseriefest angebrachten Führungsblockes 1 geführt aufgenommen sind. In Fig. 1 ist dabei nur ein Führungsteil 3 für einen der Bügelschenkel dargestellt. Das Führungsteil für den anderen Bügelschenkel ist in entsprechender Weise ausgestaltet, und ist daher in Fig. 1 nicht gesondert dargestellt. Beide Führungsteile sind über einen Zwischensteg 4 miteinander verbunden.

Bei sitzbreiten Überrollbügeln bilden die beiden Führungsteile 3 mit dem Zwischensteg 4 typischerweise einen in sich geschlossenen Führungsblock, der insbesondere durch einen Leichtmetall-Profilkörper gebildet wird. Bei fahrzeugbreiten Überrollbügeln werden die Führungsteile durch gesonderte Segmente aus Profilkörpern, die über einen gesonderten Zwischensteg zu einem Führungsblock miteinander verbunden sind, gebildet.

Die Bügelschenkel müssen nicht zwingend rohrförmig ausgebildet sein. Sie können auch durch Profilkörper gebildet werden. Die Führungsbohrungen 2 werden dann durch komplementär konfigurierte Führungsöffnungen gebildet. Aber auch Blechschalenkonstruktionen sind denkbar.

Die Führungsbohrungen 2 weisen erfindungsgemäß drei Führungs- oder Lagerbereiche auf, einen oberen Führungsbereich 5, einen mittleren Führungsbereich 6 und einen unteren Führungsbereich 7, deren Ausgestaltung in Verbindung mit den Schenkelrohren in den nachfolgenden Figuren näher dargestellt ist und im folgenden beschrieben wird. Die Führungsbohrung 2 besitzt daher eine Durchgangsbohrung abgestimmt auf den Lagerbereich 6 des Überrollbügels sowie zwei Ansenkungen zur Lagerung der Bügelschenkel in den Bereichen 5 und 7.

Eine erste Lösung ist in Fig. 2 dargestellt. Diese Fig. 2 zeigt den Führungsblock 1 mit den Bügelschenkeln 8, 9 des Überrollbügels, wobei in der rechten Hälfte der abgelegte Grundzustand des Überrollbügels und in der linken Hälfte der teilweise aufgestellte Überrollbügel dargestellt ist. An jedem Bügelschenkel 8, 9 ist eine Buchse 10 fest angebracht, die vorzugsweise aus Kunststoff besteht. Sie ist auf einer Position der Bügelschenkel aufgebracht und besitzt einen äußeren Umfang, dass sie bei abgelegtem Überrollbügel im oberen Führungsbereich 5 (siehe Fig. 1) spielfrei aufgenommen ist. Die Buchse 10 ist vorzugsweise elastisch nachgebend ausgebildet, was in Fig. 2 durch die hervorstehenden Rippen 10 a dargestellt ist.
Dabei kann (nicht dargestellt) auf den Bügelschenkeln 8, 9 eine weitere, vorzugsweise nicht nachgebende Buchse, abgestimmt für die Aufnahme im Bereich 7, beim Ausfahren des Bügels, fest aufgebracht sein.

Die Buchse 10 dient in erster Linie zur Erfüllung des ersten, im vorstehenden beschriebenen Kriteriums, der klapperfreien Lagerung des abgelegten Bügels. Da sich die Buchse 10 nur über einen sehr kleinen Teil des Bügelweges in der Bohrung des Führungsblockes befindet, den weitaus größten Teil des Hubes aber außerhalb dieser Aufnahme, setzt die leichte durch das sehr enge Spiel bedingte Klemmung dem Aufstellen des Bügels keinen wesentlichen Widerstand entgegen, was durch das nachgebend elastische Verhalten der Buchse gefördert wird.

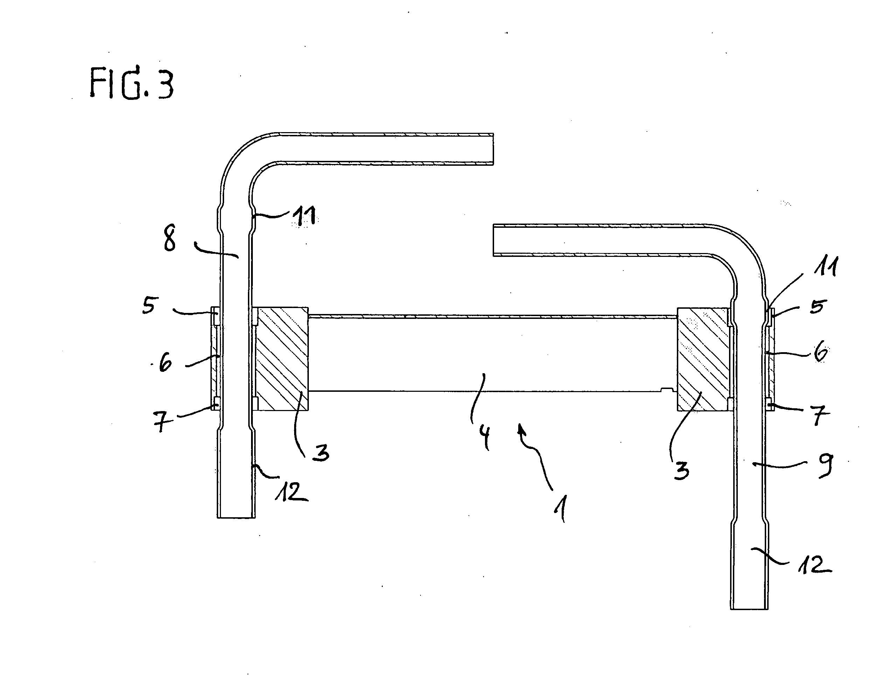

Statt der aufgebrachten Buchsen 10 (und der nicht dargestellten Buchsen für den Bereich 7) können auch mit anderen Methoden an den Bügelschenkeln 8, 9 Führungsbereiche erstellt werden, z.B. durch partielles Aufweiten der die Bügelschenkel bildenden Rohre mit bekannten Verformungsverfahren. Eine derartige Ausführungsform ist in der Fig. 3 dargestellt. Sie zeigt eine buchsenartige Verformung 11 funktionsgleich der aufgesetzten Buchse 10 in Fig. 2 für die spielfreie Aufnahme im Bereich 5 bei abgelegtem Überrollbügel (rechte Figurenhälfte) sowie eine durchmessererweitere Verformung 12 für die Aufnahme im Bereich 7 der Führungsbohrung, die auch bei der Ausführung nach Fig. 2 dargestellt ist.

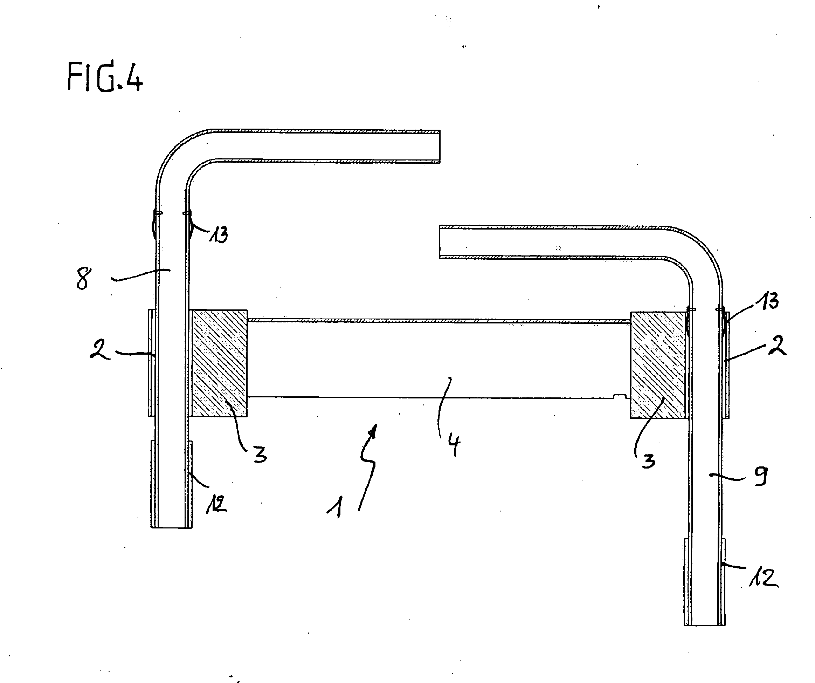

Es ist auch eine Ausführung nach Fig. 4 denkbar, mit am Umfang der Bügelschenkel auf derselben Höhe angebrachten, beispielsweise angenieteten, nach außen gewölbten blattfederartigen Elementen 13, die im abgelegten Zustand des Überrollbügels (rechte Hälfte) eng im oberen Führungsbereich anliegen. Dabei sind der Übersichtlichkeit halber in Fig. 4 die Führungsbereiche 5-7 nicht mehr im Einzelnen dargestellt.

Nach einem Aufstellweg um ca. 10 mm wird das Bügelrohr praktisch allein im mittleren Bereich 6 geführt. Das Spiel in diesem Bereich ist so bestimmt, dass das vorne beschriebene Kriterium 2 erfüllt ist, d.h. der Bügel muss schnell und leichtgängig aber auch verkantungsfrei aufstellbar sein, um den Schubladeneffekt zu vermeiden. Das Spiel kann dabei durch die Ausbildung der Führungsbohrung selbst und/oder durch Führungskomponenten am Bügelrohr vorgegeben werden.

Um im aufgestellten Zustand das Kriterium 3 zu erfüllen (schnell wirksame Kraftaufnahme, insbesondere der Seitenkräfte), d.h. die Führung im Bereich 6 so auszubilden, dass die Bügelrohre in der Lage sind, die Kräfte bei einem Überschlag aufzunehmen ohne zu weit auszuweichen, was eine spielreduzierte Führung bedingt, ist zweckmäßig jedes Führungsteil 3 mit einer durchgehenden Führungsbohrung 2 versehen, die das Bügelrohr in einer Richtung, vorzugsweise in Längsrichtung des Fahrzeuges, enger führt und in der dazu um 90 Grad versetzten Querrichtung das Bügelrohr mit deutlich weiterem Spiel führt. In Verbindung mit der engtolerierten Aufnahme der am Bügelrohr ausgeformten Aufweitung 12 im unteren Führungsbereich 7 im aufgestellten Zustand, erfolgt dadurch eine schnell wirksame Kraftableitung. Diese partielle Spielverengung im mittleren Führungsbereich 6 kann z.B. erreicht werden durch ein ovales Durchgangsloch, ausgerichtet mit seinem kleineren Durchmesser in Richtung des geringeren Spiels und einem größeren Durchmesser in Richtung des größeren Spiels.

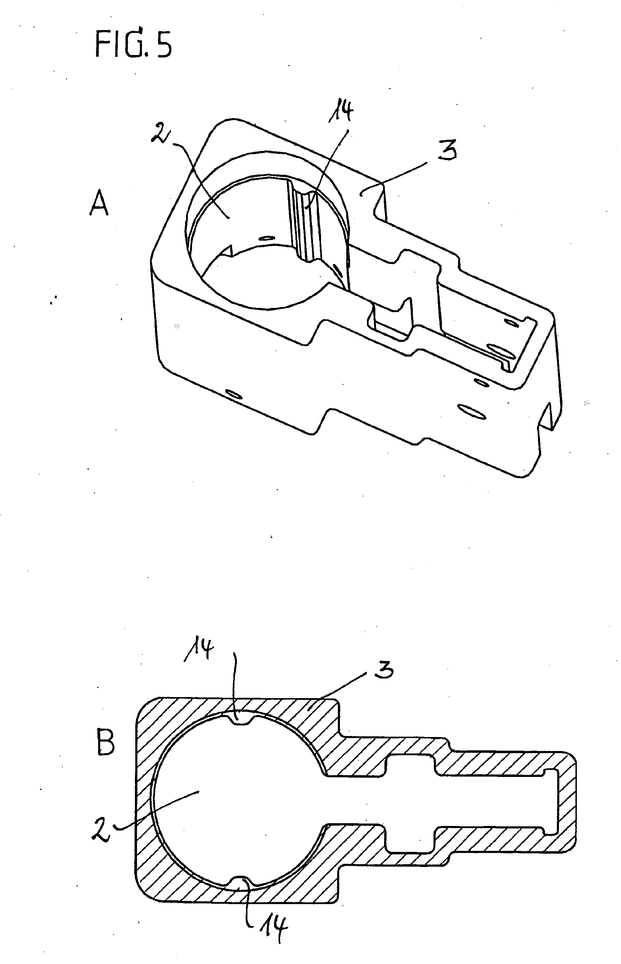

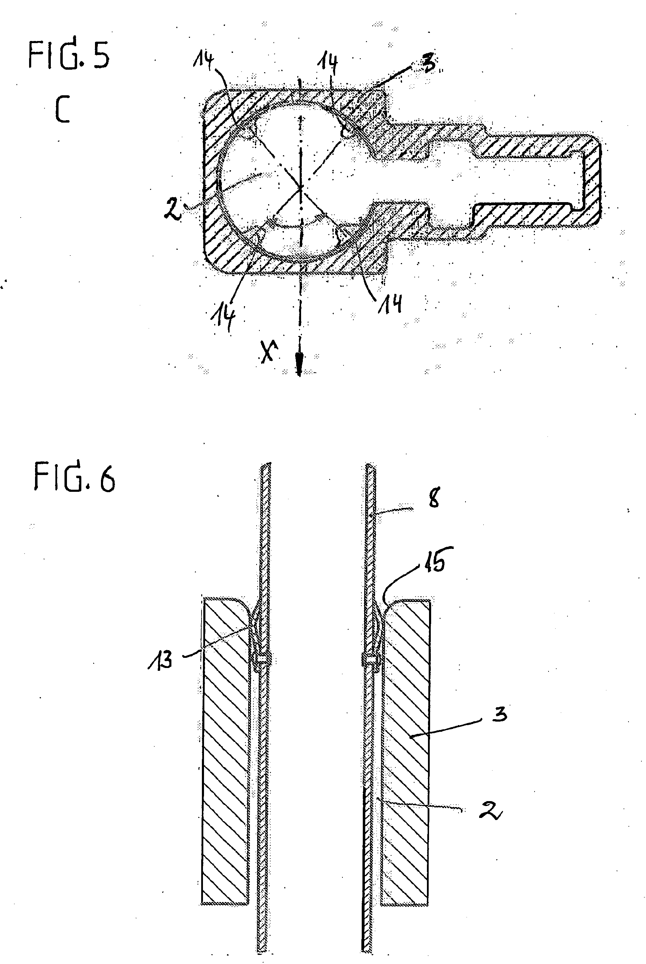

Sie kann aber auch, wie in Fig. 5 in den Figurenteilen A und B dargestellt, erreicht werden durch ein kreisrundes Loch 2 mit mindestens zwei seitlichen Rippen 14, die gegenüberliegend in der Richtung des kleineren Spiels angebracht sind. Alternativ können auch, wie im Figurenteil 5 C dargestellt, vier Rippen 14 in einem Winkel bis max. 90°, vorzugsweise max. 60° zur Fahrzeuglängsachse X, angeformt sein.

Aber auch andere Möglichkeiten zur partiellen Durchmesserverengung im mittleren Führungsbereich 6 sind denkbar, z.B. auch durch entsprechend platzierte Führungskomponenten, insbesondere Ausformungen am Bügelschenkel.

Die anderen in Fig. 5 dargestellten Öffnungen im Führungsteil 3 dienen der Anbringung bzw. Aufnahme von anderen Teilen des Überrollschutzsystems, z.B. der Verriegelungselemente der Wiedereinfahrsperre.

Um die Bügelschenkel bei aufgestellten Überrollbügeln und auftretenden Knicklasten vor der schädlichen Kerbwirkung zu schützen, erhält die Aufnahmebohrung für den Führungsbereich 5 zweckmäßig entsprechend Fig. 6 an ihrem oberen Rand eine starke Abrundung 15, um ein scharfes Eindrücken oder Einschneiden der Schenkelrohre zu verhindern. Dabei zeigt die Fig. 6 eine durchmessererweiterte Ausbildung mit blattfederartigen Elementen 13 entsprechend Fig. 4. Der Einfachheit halber sind dabei die Führungsbereiche im Einzelnen nicht dargestellt.

Durch die erfindungsgemäßen Maßnahmen, nämlich die Ausbildung von unterschiedlichen Führungsbereichen 5, 6 und 7 in den Führungsbohrungen 2 der Führungsteile 3 in Verbindung mit dem Merkmal, dass die notwendigen Führungsmittel einschließlich der Zentrierungen, wie Buchsen 10 oder buchsenartig durchmessererweiterte Abschnitte 11, 12 oder 13, unmittelbar an den Bügelschenkelrohren angebracht sind, d.h. mit ihnen ausfahren und damit nur partiell mit den Führungsbereichen im Wirkkontakt sind, wird einerseits eine gute Lagerung des Überrollbügels im eingefahrenen Normalzustand, andererseits aber auch ein ungehemmter Freilauf bei der Aufstellbewegung gewährleistet.

Der enge obere Führungsbereich 5 für die eng geführte Aufnahme der Bügelschenkel mittels der Elemente 10-13 beträgt in axialer Richtung nur ca. 5 bis 30 mm und setzt damit dem ausfahrenden Bügel nur einen begrenzten Widerstand entgegen. Die Führung der Elemente 10 - 13 ist praktisch spielfrei. Es folgt dann der mittlere Führungsbereich 6 mit einer axialen Länge von 60 - 150 mm, und mit einem wesentlich größeren Spiel im Bereich von 1,5 mm bis 4,0 mm, welcher dem ausfahrenden Bügel praktisch keinen Widerstand entgegensetzt.
Im Bereich 7, der eine Länge von 15 - 50 mm aufweist, ist das Führungsspiel wieder wesentlich enger gehalten. Es liegt im Bereich von 0,5 mm bis 1,5 mm. In diesem Führungsbereich fährt der Bügel mit maximaler Aufstellgeschwindigkeit trotz der durch die Buchse bzw. Ausformung 12 vorgegebenen geringen Spiels mühelos ein.

Bei Systemen, bei denen ein Bügel nahezu die komplette Fahrzeugbreite überspannt, werden gegenüber dem dargestellten Zustand noch zusätzliche Bauteile zur Synchronisation der Aufstellbewegung benötigt, z.B. eine so genannte Gleichlaufwelle. Bei diesen Systemen findet die Erfindung bevorzugt Anwendung.

### Bezugszeichenliste

- 1: Führungsblock
- 2: Führungsbohrungen (Führungsöffnungen)
- 3: Führungsteil
- 4: Zwischensteg
- 5: Oberer Führungsbereich
- 6: Mittlerer Führungsbereich
- 7: Unterer Führungsbereich
- 8: (linker) Bügelschenkel
- 9: (rechter) Bügelschenkel
- 10: Buchse
- 10 a: elastisch nachgebende Rippen
- 11: buchsenartige Verformung an den Bügelschenkeln
- 12: durchmessererweiterte Verformung zur Führung im unteren Führungsbereich
- 13: blattfederartige Elemente
- 14: seitliche Rippen
- 15: Abrundung

## Patentansprüche

1. Überrollschutzsystem für Kraftfahrzeuge mit einem Überrollbügel, der mittels seiner beiden Bügelschenkel (8, 9) in einer fahrzeugfesten Halterung geführt aufgenommen ist, und im Normalzustand durch eine Haltevorrichtung in einer unteren, abgelegten Ruhelage haltbar sowie sensorgesteuert unter Lösen der Haltevorrichtung durch einen Energiespeicher in eine verriegelte aufgestellte, stützende Stellung bringbar ist, wobei die fahrzeugfeste Halterung zwei Führungsteile (3) mit jeweils einer Führungsöffnung (2) zur Aufnahme des zugehörigen Bügelschenkels (8, 9) besitzt und der Führungsöffnung (2) Führungskomponenten für die Bügelschenkel (8, 9) zugeordnet sind, **dadurch gekennzeichnet, dass** mindestens zwei Führungskomponenten (10, 11, 12, 13) axial beabstandet in einer festen Position direkt an den Bügelschenkeln (8, 9) ausgebildet sind, derart, dass sie in der jeweiligen Stellung des Überrollbügels in Verbindung mit angepassten Führungsbereichen (5, 6, 7) der Führungsbohrung (2) das dort jeweils notwendige Führungsspiel vorgeben.

2. Überrollschutzsystem nach Anspruch 1, **dadurch gekennzeichnet, dass** eine der Führungskomponenten eine ganz oder partiell peripher verlaufende Führungsfläche zur direkten Anlage an der Innenwand der zugehörigen Führungsöffnung (2) in deren oberen Bereich (5) in der abgelegten Ruhelage des Überrollbügels aufweist und direkt jeweils an dem zugehörigen Bügelschenkel (8, 9) in fester Verbindung mit ihm vorgesehen ist.

3. Überrollschutzsystem nach Anspruch 1 oder 2, **dadurch gekennzeichnet, dass** eine der Führungskomponenten (12) eine ganz oder partiell peripher verlaufende Führungsfläche zur direkten Anlage an der Innenwand der zugehörigen Führungsöffnung (2) in deren unteren Bereich (7) in der aufgestellten Stellung aufweist und direkt jeweils an dem zugehörigen Bügelschenkel (8, 9) in fester Verbindung mit ihm vorgesehen ist.

4. Überrollschutzsystem nach Anspruch 2 oder 3, **dadurch gekennzeichnet, dass** eine der Führungskomponenten eine peripher ganz oder partiell umlaufende Führungsfläche, die zumindest teilweise durch den Mantel des jeweiligen Schenkelrohres gebildet ist, aufweist.

5. Überrollschutzsystem nach einem der Ansprüche 1 bis 4, **dadurch gekennzeichnet, dass** die Führungsöffnung (2) jeweils drei axial aufeinanderfolgende Führungsbereiche (5, 6, 7) aufweist, die hinsichtlich des Führungsspieles des von ihr aufgenommenen Bügelschenkels (8, 9) entsprechend den an ihm ausgebildeten Führungskomponenten (10, 11, 12, 13) unterschiedlich ausgestaltet sind.

6. Überrollschutzsystem nach Anspruch 5, **gekennzeichnet durch** einen mittleren Führungsbereich (6), welcher mit relativ großem Führungsspiel an den Bügelschenkeldurchmesser angepasst ist und an den sich ein oberer und unterer durchmessergrößerer Führungsbereich (5, 7) anschließt, und **dadurch**, dass die zusätzlichen fest an den Bügelschenkeln (8, 9) angebrachten Führungskomponenten einmal eine obere Führungskomponente (10, 11, 13), die so ausgebildet und auf einer solchen Position des jeweiligen Bügelschenkels (8, 9) angebracht ist, dass sie in der abgelegten Ruhelage des Überrollbügels mit sehr engem Führungsspiel in dem oberen Führungsbereich (5) aufgenommen ist, und zum anderen eine untere Führungskomponente (12) aufweisen, die so ausgebildet und auf einer solchen Position des jeweiligen Bügelschenkels (8, 9) angebracht ist, dass sie am Ende der Aufstellbewegung in dem unteren Führungsbereich (7) mit engem Führungsspiel aufgenommen ist.

7. Überrollschutzsystem nach Anspruch 6, **dadurch gekennzeichnet, dass** der die Bügelschenkel (8, 9) mit relativ großem Spiel führende mittlere Führungsbereich (6) in mindestens einer Richtung partielle Durchmesserverengungen mit engem Führungsspiel zum zugehörigen Bügelschenkel (8, 9) aufweist.

8. Überrollschutzsystem nach Anspruch 7, **dadurch gekennzeichnet, dass** die Führungsöffnung (2) im mittleren Führungsbereich (6) oval ausgebildet ist mit der kleinen Achse in Richtung des engen Führungsspiels.

9. Überrollschutzsystem nach Anspruch 7, **dadurch gekennzeichnet, dass** die Führungsöffnung (2) im mittleren Führungsbereich (6) kreisrund ausgebildet ist und an mindestens zwei gegenüberliegenden Stellen axial verlaufende Rippen (14) aufweist.

10. Überrollschutzsystem nach Anspruch 7, **dadurch gekennzeichnet, dass** die Bügelschenkel (8, 9) in einem Bereich, der während des Aufstellvorganges des Überrollbügels im mittleren Führungsbereich (6) geführt wird, in mindestens einer Richtung partiell durchmessererweitemde Ausformungen zur Vorgabe des engen Führungsspieles in dieser Richtung aufweist.

11. Überrollschutzsystem nach einem der Ansprüche 6 bis 10, **dadurch gekennzeichnet, dass** die obere Führungskomponente (10, 11, 13) jeweils durch eine unverschiebbar auf den Bügelschenkeln (8, 9) angebrachte, elastisch nachgebend am oberen Führungsbereich (5) anliegend ausgebildete Buchse (10) vorzugsweise als Kunststoffbuchse mit vorgewölbten Stegen (10 a) gebildet ist.

12. Überrollschutzsystem nach einem der Ansprüche 6 bis 10, **dadurch gekennzeichnet, dass** die obere Führungskomponente (10, 11, 13) durch eine partielle buchsenartige Verformung (11) des Bügelschenkels (8, 9) oder durch eine kranzartige Anbringung von blattfederartigen Elementen (13) gebildet ist.

13. Überrollschutzsystem nach einem der Ansprüche 6 bis 12, **dadurch gekennzeichnet, dass** die untere Führungskomponente (12) jeweils durch eine fest auf den Bügelschenkeln (8, 9) aufgebrachte Buchse oder durch eine buchsenartige Aufweitung (12) der Bügelschenkel gebildet ist.

## Claims

1. Rollover protection system for motor vehicles with a roll bar which is held in a guided manner by means of its two bar side pieces (8, 9) in a holder which is fixed to the vehicle, and in the normal state can be retained by a retaining device in a bottom, lowered rest position and brought into a locked raised, supporting position under sensor control, while releasing the retaining device by means of an energy store, wherein the holder, fixed to the vehicle, has two guide parts (3) each with a guide opening (2) for holding the associated bar side piece (8, 9), and guide components for the bar side pieces (8, 9) are associated with the guide opening (2), **characterised in that** at least two guide components (10, 11, 12, 13) are formed directly on the bar side pieces at an axial spacing in a fixed position such that in the respective position of the roll bar, in conjunction with adapted guide regions (5, 6, 7) of the guide bore (2), they predetermine the guide clearance required here at the time.

2. Rollover protection system according to Claim 1, **characterised in that** one of the guide components comprises a guide surface which extends entirely or partially around the periphery for direct abutment against the inner wall of the associated guide opening (2) in the top region (5) thereof in the lowered rest position of the roll bar and is provided directly at the associated bar side piece (8, 9) in each case, to which it is firmly connected.

3. Rollover protection system according to Claim 1 or 2, **characterised in that** one of the guide components (12) comprises a guide surface which extends entirely or partially around the periphery for direct abutment against the inner wall of the associated guide opening (2) in the bottom region (7) thereof in the raised position and is provided directly at the associated bar side piece (8, 9) in each case, to which it is firmly connected.

4. Rollover protection system according to Claim 2 or 3, **characterised in that** one of the guide components comprises a guide surface which extends entirely or partially around the periphery and is formed at least partly by the circumferential surface of the respective side piece tube.

5. Rollover protection system according to any one of Claims 1 to 4, **characterised in that** the guide opening (2) in each case comprises three axially successive guide regions (5, 6, 7) which are configured differently with regard to the guide clearance of the bar side piece (8, 9) which they hold according to the guide components (10, 11, 12, 13) which are formed thereon.

6. Rollover protection system according to Claim 5, **characterised by** a central guide region (6) which is adapted to the diameter of the bar side piece with a relatively large guide clearance and which is adjoined by a top and a bottom guide region (5, 7) of a larger diameter, and in that the guide components which are additionally secured firmly to the bar side pieces (8, 9) comprise on the one hand a top guide component (10, 11, 13), which is formed and secured at a position of the respective roll bar (8, 9) such that when the roll bar is in the lowered rest position it is held with a very narrow guide clearance in the top guide region (5), and on the other a bottom guide component (12) which is formed and secured at a position of the respective bar side piece (8, 9) such that at the end of the raising movement it is held with a narrow clearance in the bottom guide region (7).

7. Rollover protection system according to Claim 6, **characterised in that** the central guide region (6) guiding the bar side pieces (8, 9) with a relatively large clearance has partial contractions of diameter in at least one direction with a narrow guide clearance relative to the associated bar side piece (8, 9).

8. Rollover protection system according to Claim 7, **characterised in that** the guide opening (2) in the central guide region (6) is of oval formation with the minor axis in the direction of the narrow guide clearance.

9. Rollover protection system according to Claim 7, **characterised in that** the guide opening (2) in the central guide region (6) is of circular formation and comprises axially extending ribs (14) at least at two opposite points.

10. Rollover protection system according to Claim 7, **characterised in that,** in a region which is guided in the central guide region (6) during the process of raising the roll bar, the bar side pieces (8, 9) comprise formations which widen partially in diameter in at least one direction in order to predetermine the narrow guide clearance in this direction.

11. Rollover protection system according to any one of Claims 6 to 10, **characterised in that** the top guide component (10, 11, 13) is in each case formed by a bush (10), preferably as a plastics bush with pre-arched webs (10 a), which is secured in an immobile manner to the bar side pieces (8, 9) and formed to lie in a resiliently compliant manner against the top guide region (5).

12. Rollover protection system according to any one of Claims 6 to 10, **characterised in that** the top guide component (10, 11, 13) is in each case formed by a partial bush-like deformation (11) of the bar side piece (8, 9) or by a crown-like application of leaf spring-like elements (13).

13. Rollover protection system according to any one of Claims 6 to 12, **characterised in that** the bottom guide component (12) is in each case formed by a bush which is firmly applied to the bar side pieces (8, 9) or by a bush-like widening (12) of the bar side pieces.

## Revendications

1. Système de protection contre les tonneaux pour véhicules automobiles comprenant un arceau de sécurité, qui est reçu guidé dans un support fixé au véhicule au moyen de ses deux branches d'arceau (8, 9), et qui peut être maintenu, à l'état normal, dans une position de repos rabattue, inférieure, par un dispositif de retenue, et être amené dans une position d'appui, dressée, verrouillée par servocommande, par desserrage du dispositif de retenue, au moyen d'un accumulateur d'énergie, le support fixé au véhicule comportant deux éléments de guidage (3) avec respectivement une ouverture de guidage (2) pour loger la branche d'arceau (8, 9) correspondante et des composants de guidage pour les branches d'arceau (8, 9) étant associés à l'ouverture de guidage (2), **caractérisé en ce qu'**au moins deux composants de guidage (10, 11, 12, 13) sont réalisés espacés de façon axiale dans une position fixe, directement au niveau des branches d'arceau (8, 9), de telle manière qu'ils prédéfinissent dans la position respective de l'arceau de sécurité, en relation avec des zones de guidage (5, 6, 7) adaptées du perçage de guidage (2), le jeu de guidage qui y est respectivement nécessaire.

2. Système de protection contre les tonneaux selon la revendication 1, **caractérisé en ce qu'**un des composants de guidage présente une surface de guidage s'étendant entièrement ou partiellement de manière périphérique, pour l'appui direct contre la paroi intérieure de l'ouverture de guidage (2) correspondante dans sa zone supérieure (5), dans la position de repos, rabattue, de l'arceau de sécurité, et est prévu directement, respectivement, au niveau de la branche d'arceau (8, 9) correspondante en liaison rigide avec celle-ci.

3. Système de protection contre les tonneaux selon la revendication 1 ou 2, **caractérisé en ce qu'**un des composants de guidage (12) présente une surface de guidage s'étendant entièrement ou partiellement de manière périphérique, pour l'appui direct contre la paroi intérieure de l'ouverture de guidage (2) correspondante dans sa zone inférieure (7), dans la position dressée, et est prévu directement, respectivement, au niveau de la branche d'arceau (8, 9) correspondante en liaison rigide avec celui-ci.

4. Système de protection contre les tonneaux selon la revendication 2 ou 3, **caractérisé en ce qu'**un des composants présente une surface de guidage entièrement ou partiellement périphérique, qui est formée au moins partiellement par l'enveloppe de la branche tubulaire respective.

5. Système de protection contre les tonneaux selon l'une quelconque des revendications 1 à 4, **caractérisé en ce que** l'ouverture de guidage (2) présente respectivement trois zones de guidage (5, 6, 7) se suivant de manière axiale, qui sont réalisées différemment en ce qui concerne le jeu de guidage de la branche d'arceau (8, 9) reçue par l'ouverture en fonction des composants de guidage (10, 11, 12, 13) réalisés au niveau de la branche.

6. Système de protection contre les tonneaux selon la revendication 5, **caractérisé par** une zone de guidage médiane (6), qui est adaptée au diamètre de la branche d'arceau avec un jeu de guidage relativement grand et à laquelle se raccorde une zone de guidage supérieure et inférieure (5, 7) de diamètre plus grand, et en ce que les composants de guidage supplémentaires, montés solidement au niveau des branches d'arceau (8, 9) présentent d'une part un composant de guidage supérieur (10, 11, 13), qui est réalisé et placé sur une position de la branche d'arceau (8, 9) respective de telle sorte qu'il est logé, dans la position de repos rabattue de l'arceau de sécurité, avec un jeu de guidage très réduit dans la zone de guidage supérieure (5), et, d'autre part, un composant de guidage inférieur (12), qui est réalisé et placé sur une position de la branche d'arceau (8, 9) respective de telle sorte qu'il est logé, à la fin du mouvement de redressement, dans la zone de guidage inférieure (7) avec un jeu de guidage réduit.

7. Système de protection contre les tonneaux selon la revendication 6, **caractérisé en ce que** la zone de guidage médiane (6) guidant les branches d'arceau (8, 9) avec un jeu relativement grand présente, dans au moins une direction, des rétrécissements de diamètre partiel avec un jeu de guidage réduit vers la branche d'arceau (8, 9) correspondante.

8. Système de protection contre les tonneaux selon la revendication 7, **caractérisé en ce que** l'ouverture de guidage (2) est réalisée de manière ovale dans la zone de guidage médiane (6), avec le petit axe dans la direction du jeu de guidage réduit.

9. Système de protection contre les tonneaux selon la revendication 7, **caractérisé en ce que** l'ouverture de guidage (2) est réalisée de manière circulaire dans la zone de guidage médiane (6) et présente des nervures (14) s'étendant axialement à au moins deux endroits opposés.

10. Système de protection contre les tonneaux selon la revendication 7, **caractérisé en ce que** les branches d'arceau (8, 9) présentent dans une zone, qui est guidée dans la zone de guidage médiane (6) pendant le redressement de l'arceau de sécurité, des saillies élargissant partiellement le diamètre dans au moins une direction pour prédéfinir le jeu de guidage réduit dans cette direction.

11. Système de protection contre les tonneaux selon l'une quelconque des revendications 6 à 10, **caractérisé en ce que** le composant de guidage supérieur (10, 11, 13) est formé respectivement par un manchon (10) monté de manière fixe sur les branches d'arceau (8, 9) et réalisé de façon flexible et élastique en appui contre la zone de guidage supérieure (5), de préférence sous forme de manchon en plastique doté de nervures (10a) cintrées au préalable.

12. Système de protection contre les tonneaux selon l'une quelconque des revendications 6 à 10, **caractérisé en ce que** le composant de guidage supérieur (10, 11, 13) est formé par une déformation (11) partielle en forme de manchon de la branche d'arceau (8, 9) ou par une application en forme de couronne d'éléments (13) de type ressort à lames.

13. Système de protection contre les tonneaux selon l'une quelconque des revendications 6 à 12, **caractérisé en ce que** le composant de guidage inférieur (12) est formé respectivement par un manchon monté solidement sur les branches d'arceau (8, 9) ou par un élargissement (12) en forme de manchon des branches d'arceau.
